# EUROPEAN PATENT SPECIFICATION

(11) **EP 0 378 196 B1**
(45) Date of publication and mention of the grant of the patent: **14.07.1993**
(21) Application number: 90100447.3
(22) Date of filing: 10.01.1990
(51) Int. Cl.: A01J 13/00, A47J 43/12

(54) **Static pressure dispenser of whipped products and process of operation**
Statische Druckabgabevorrichtung für verschäumte Produkte und deren Verwendungsverfahren
Distributeur statique de pression pour produits à fouetter et procédé d'opération

(30) Priority: 11.01.1989 US 295810
(43) Date of publication of application: 18.07.1990
(73) Proprietor: Gruenewald, Frederik P., Danvers, MA 01923 (US)
(72) Inventor: Gruenewald, Frederick P., Danvers MA 01923 (US)
(74) Representative: Bardehle, Heinz, Dipl.-Ing.

(56) References cited:
- DE-B- 1 000 301
- DE-B- 1 057 995
- DE-C- 655 876
- DE-C- 943 582
- GB-A- 1 207 008
- US-A- 1 889 236
- US-A- 3 064 696
- US-A- 3 891 739
- US-A- 4 201 736
- US-A- 4 220 258

## Description

### Field of the Invention

The present invention relates to the aeration of whippable fluids and more particularly to a new and improved apparatus and method for pressurized whipping or emulsifying of food products and dispensing the same.

### Description of the Prior Art

Whipped, aerated or emulsified food products have been known and used for some time as well as methods and apparatus for producing the same. Whipped cream, for example for household and commercial use, was heretofore produced by mechanical mixers and beaters that are manually or power driven. Currently, they have largely been replaced by disposable aerosol cans and refillable pressure whippers.

An important use of whipping equipment is to produce whipped food products such as whipped cream, imitation whipped cream and toppings for application to deserts such as ice cream sundaes, cakes, pies and the like at ice cream parlors, restaurants, hotels and commercial bakeries wherein the toppings must remain stiff and stable for relatively long periods of time and under adverse conditions.

Whipping by effervescence, that is whipping by utilizing pressurized equipment, is also well known, In whipping by effervescence, a liquid food product such as cream is introduced to a pressurized container and a gas such as nitrous oxide alone or mixed with carbon dioxide is dissolved or dispersed in the cream under pressure. The solubility of a gas in the cream is generally directly proportional to the pressure encountered. Upon release of the pressurized cream to the atmosphere through a suitable nozzle, the gas passes out of solution but the fat masses tend to remain as foam. Accordingly, whipped cream has been described as a dispersion of air or gas cells and clumped fat masses as contiguous phases in cream serums in the form of a more or less rigid foam.

The process of whipping includes dispensing and incorporating small bubbles of a gas into a whippable material to cause expansion of the material. The expansion is commonly referred to as overrun. Thus, if the whipped product occupies twice the space of the original material, it is said to have one hundred percent overrun. The stability of the whipped product, particularly under high overrun, is in large measure dependent upon the size of the gas bubbles and the uniformity in size and distribution. The characteristics generally considered in evaluating the quality of whipped products dispensed from a pressurized container include its stiffness and stability, over-run, drainage and appearance or shape. Such qualities are in great part dependent upon the efficiency of the pressurized whipping to provide intimate mixing of the whippable liquid and the propellant or propellant gas. Other qualities to be considered are the simplicity of the process and apparatus for pressurized whipping and dispensing of whipped products.

Exemplary of the state of the art of such pressurized whipping apparatus and methods are the following U.S. patents:
1,899,236 2,375,833 3,713,841
2,342,972 3,209,554 4,220,258

While such prior devices provide limited improvements in the areas intended, there still exists a great need for a new and improved static whipping method and an apparatus which is simple in construction, efficient in use and economical in manufacture. I have found that the basic aeration theory, the equipment design and the process of operating has some serious flaws. I have particularly found that an improvement can be made in the introduction of the propellant gas into the whippable liquid. I have found that there exists a need for a whipping apparatus and method which is simple in construction, efficient in use and economical in manufacture. Previously, the gas was introduced into the whippable liquid by manually agitating (shaking) the pressurized container. I have found that when operators agitate the whippable liquid, the quantity of gas introduced into the cream can vary because the duration and degree of agitation cannot be controlled and thus the amount of overrun can vary widely. Moreover, if the container is agitated too much, the liquid can turn into a gel-like or buttery consistency within the container and will be expelled, if at all, in that gel-like or buttery consistency which results in large amounts of cream waste in the devices of the art. More importantly, the pressure systems of the prior art cannot hold dissolved pressurizing gas in the cream for more than a limited amount of time. When the gas emerges from the solution and returns to the head space, the subsequent servings of cream frequently become soft and semi-liquid and are unacceptable. The operator may attempt to rectify the problem by shaking the container further or recharging the vessel which causes the remaining cream to become buttery and unusable. Moreover, DE-C-655876 discloses a method and device in accordance with the prior art portions of independent claims 1, 4 and 7.
A similar method and device is disclosed in DE-C-943582 and its addition DE-B-1000301.

Accordingly, a principal object of the present invention is to provide a whipping and dispensing device having no need for agitation and method of whipping a whippable liquid without agitation of the container that holds the whippable liquid.

A further object of the present invention is to provide a pressurized whipping and dispensing device which provides for new and improved static whipping and dispensing.

A still further object of the present invention is to provide a static pressurized whipping and dispensing device having improved cleaning, sanitation and maintenance characteristics.

Another object of the invention is to provide static whipping for portable dispensers in which the need for shaking is eliminated thus improving safety since operators can avoid the risk of dropping the dispenser and breaking it while it is being shaken.

These and other objects of the invention will in part appear hereinafter and will in part become apparent after consideration of the specification with reference to the accompanying drawings and the claims.

### Summary of the Invention

The present invention as claimed in independent claims 1, 4 and 7 provides a method and device for static whipping and dispensing of whippable food products, solving the above objects. Preferred features are set out in the dependent claims. The device includes a container having an interior chamber adapted to confine propellant gas and a given amount of whippable liquid under a propellant gas pressure by means of a cap element which is secured to the container and which closes the chamber. The cap is provided with a combined charging and dispensing passage therethrough. A combined charging and dispensing nozzle or two-valve, which controls both the delivery of the propellant gas to the chamber for charging, and also the dispensing of the contents is disposed outside of the cap and connected to one end of the passage. Exemplary of the nozzle or valve is the device described in United States Patent 3,064,696. A static means for intimate mixing of the whippable liquid and the propellant or charging gas is disposed within the chamber and includes an elongated tubular member having one end connected to the other end of the charging and dispensing passage in the cap and the other end extending to a point adjacent the bottom of the chamber whereby when the container is charged with the whipping liquid and propellant gas. The lower portion of the tubular member is positioned in the whippable liquid and the upper portion is positioned in the head space above the liquid. An aperture is disposed in the tubular member at a point in the head space above the level of the given amount of whippable liquid. The size of the aperture is critical and is selected so as to permit a limited amount of propellant gas to enter the tubular member from the head space of the container as discussed hereinafter. The static means further includes an internal mixer means which preferably is an elongated core member having a multiplicity of semi-rigid fiber elements extending generally radially about the core member and disposed within the tubular member. The diameter of the mixer means is preferably slightly larger than the diameter of the tubular member so as to frictionally hold the fiber elements in the tubular member when inserted. The fibers preferably extend from a point below the aperture to a point adjacent the upper end of the tubular member and the passage of the cap element.

The method of producing the whippable food products comprises supplying a given quantity of whippable liquid to a pressure container, introducing a propellant gas to pressurize the whippable liquid, causing a portion of the whippable liquid to flow through an elongated zone of restricted area, engaging the liquid with a multiplicity of static mixing means disposed in the restricted zone while introducing a limited volume of propellant gas to the restricted zone, contacting the propellant gas with the whippable liquid to agitate the liquid and cause an intimate intermixing of the liquid and gas, continuing the static agitation and intermixing to produce a whipped product as it passes through a dispensing nozzle by expansion of the propellant or propellant gas intermixed with the liquid.

### Brief Description of the Drawings

For a fuller understanding of the nature and desired objects of the invention, reference should be had to the following detailed description taken in connection with the accompanying drawings wherein like reference characters denote corresponding parts throughout the several views and wherein:
Figure 1 is a side elevational view partly in section of a pressurized static whipping container employing the principals of the present invention;
Figure 2 is an enlarged cross-sectional view of the static whipping device employing the principals of the present invention connected to the pressurized container cap of Figure 1;
Figure 3 is an enlarged view of elements of the container shown in Figure 2; and

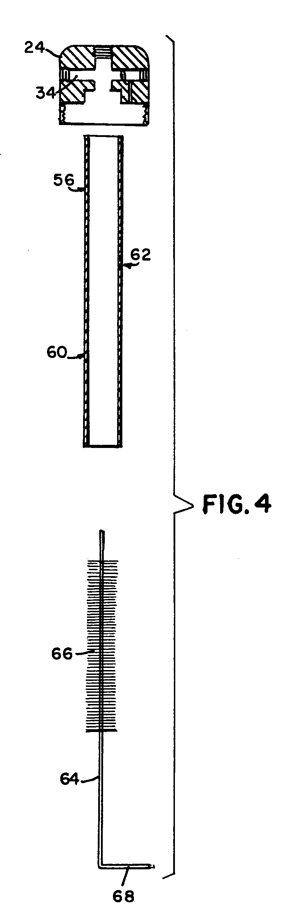

Figure 4 is an exploded view of the static whipping device of Figure 2.

### Detailed Description of the Preferred Embodiment

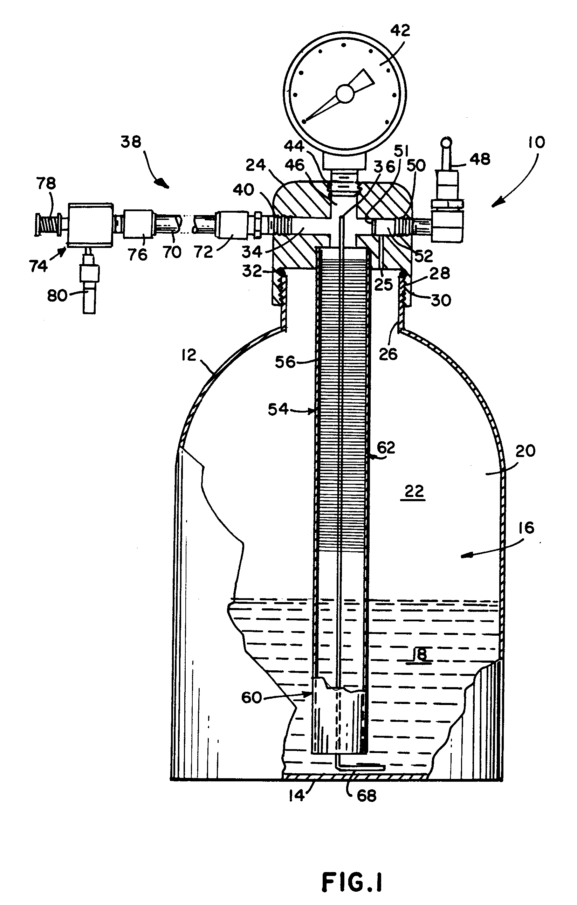

Referring now to the drawings, and more particularly to Figure 1, there is illustrated a pressurized static whipping and dispensing container, indicated generally by the numeral 10, employing the principals of the present invention. The pressurized container 10 includes a side wall 12, a bottom wall 14 and an interior chamber 16 which is adapted to hold a given amount of whippable liquid 18 under pressure of a propellant gas which fills the head space 22 above the liquid 18. A cap 24 is secured to the externally threaded neck of the container 10 by mating screw threads 28 disposed in the male section 30 of cap 24. An O-ring seal 32 is disposed between the mouth of the neck 26 and the interior of the cap 24 to prevent leakage of fluids. The cap 24 is provided with a combined charging and dispensing passageway or conduit 34, one end of which communicates with the chamber 16 and the static means (discussed hereinafter). The other end of the passageway 34 communicates with a two-way valve system, indicated generally by the numeral 38, which is screw threaded into the cap, as shown at 40. The two-way valve system 38 controls both the delivery of the high pressure charging or propellant gas 20 into the chamber 16 of the container for charging the latter and also the dispensing of the pressurized contents of the chamber. The cap is also preferably provided with a conventional pressure gauge 42 which is screw threaded into the top of cap 24, as shown at 44 and communicates with chamber 16 through passageway 46. The cap is further preferably provided with a conventional saftey vent valve 48 which is screw threaded into the side of the cap, as shown at 50 and communicates with the chamber 16 through a passageway 25. Direct communication with passageway 46 is blocked by a diaphragm 51.

A static means for intimate mixing of the whippable liquid and the propellant or charging gas is disposed within the chamber 16 and includes an elongated tubular member 54 preferably made of a polymeric material such as Nylon or polypropylene, having the upper end 56, which is preferably force fitted into internal bore 57 of the cap, as shown at 58 but may be screw-threaded also. In this manner, the upper end 56 communicates with the charging and dispensing passage 34 in the cap 24. The length of the tubular member 54 is selected with respect to the height of the container so that when attached to the cap, the lower portion 60 extends into the whippable liquid 18 and is adjacent the bottom 14 of the chamber 16 while the upper portion 56 is positioned in the head space 22 above the liquid when the container is charged with the whippable liquid and propellant.

An aperture 62 is disposed in the tubular member 54 so as to be positioned at a point in the head space 22 above the level of the given amount of whippable liquid 18. The size of the aperture is between about 0.016 and 0.020 inches and is critical. It is selected so as to permit a limited amount of propellant gas 20 to enter the tubular member from the head space of the container as discussed hereinafter. The aperture is formed by making a hole in the tubular member 54 and then sealing the perimeter of the hole by heating it to the plastic's softening point whereby the plastic will lose its memory and the hole will remain permanently open. Preferably, the sealing is accomplished by putting a wire in the hole and heating the wire to, at or near the softening point (but below the charring point) of the plastic and then withdrawing the wire after the softened material has cooled.

The static means also includes an elongated core member 64 which has a multiplicity of semi-rigid fiber elements 66 extending generally radially about the core member and which is slidably disposed within the tubular member 54. The diameter of the fibers 66 disposed about the core member 64 is preferably slightly larger than the diameter of the tubular member 54 so as to be frictionally held in the tubular member when inserted. The fibers preferably extend from a point at or below the aperture 62 to a point adjacent or slightly below the upper end of the tubular member 54 and the passage 34 of the cap element. The lower end of the core 64 is provided with a handle portion 68 to facilitate the insertion and removal of the core member. It can be appreciated that the core member is in the form of an elongated brush-like device.

The two-way valve system 38 includes a conventional flexible braided hose 70 attached at one end to the cap by a conventional screw-threaded hose connector 72 and at the end to a conventional two-way valve 74 also by a conventional screw-threaded hose connector 76. The two-way charging and dispensing valve 74 is conventional and includes a push button valve assembly 78 and a charging and dispensing nozzle 80.

In a non-limiting example, the pressure static whipping and dispensing device of the present invention is constructed using a stainless steel pressure container shaving a volume of whippable liquid of two to five quarts, and a stainless steel cap. The static whipping device is formed of Nylon having a length of about 7.25 inches, an outside diameter (O.D.) of 0.500 inches and an inside diameter (I.D.) of 0.330 inches. The core member is formed of stainless steel wire with spiral-wound Nylon fibers. The aperture diameter is 0.018 inches.

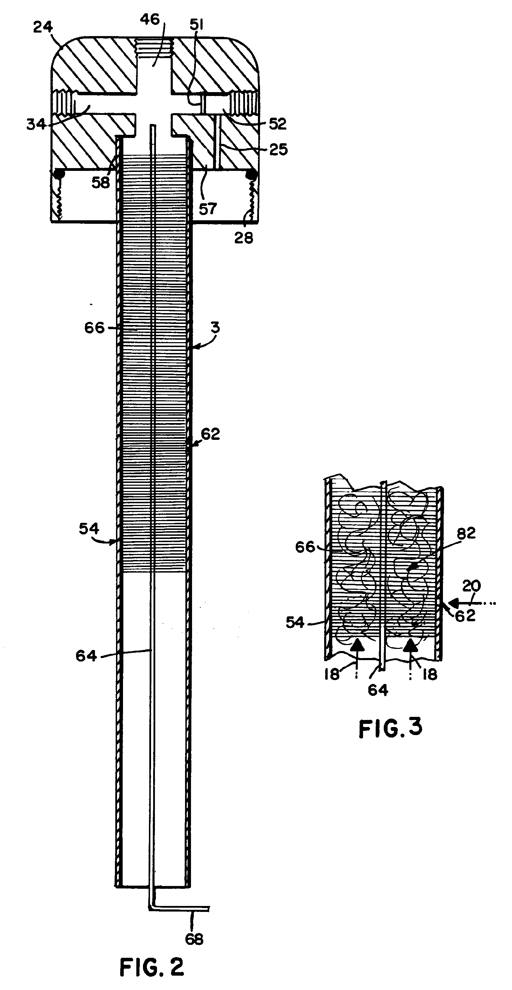

In producing a whippable food product, a given volume of liquid whipping cream is introduced to the chamber of the pressure container and thereafter the container is charged with a propellant gas to a pressure of 200 to 220 psi. No agitation of the container is necessary to dissolve the propellant gas into the cream. When the operator desires to dispense whipped cream, the dispensing push button is pressed. At this point, the propellant gas pressure in the chamber causes the whippable liquid to flow or syphon up the whipping tube and into contact with the fibers of the core member (core brush). At the same time, the propellant gas enters the aperture in the whipping tube and contacts the liquid cream as the cream level passes the aperture as best shown in Figure 3. The result of the pre-agitation of the liquid cream by the fibers prior to the aperture and the continued agitation as the cream continues to rise together with the increased or violent agitation caused by the introduction of the propellant gas through the aperture causes an intimate intermixing (as represented by the numeral 82 in Figure 3) of the cream-liquid and gas. The cream and gas continue to intermix as the mixture level rises to the dispensing passage, and produces a whipped product as it passes through the dispensing nozzle by the expansion of the propellant gas that is intermixed with the liquid cream. It can be appreciated that the tubular member provides a venturi effect to the passage of the whippable liquid therethrough due to the restriction within the passageway of the tubular member due to the bristles and the core.

If the operator wishes to refill the pressure container, the remaining head pressure is simply vented off through the safety vent valve. The cap is removed and fresh whippable liquid is added to the capacity of the given amount. The cap is replaced and the container is recharged with the propellant gas.

With respect to sanitation, it is of course necessary to dismantle the apparatus and clean all parts. The design of the static means of the present invention is such that the tube and core brush can be easily and readily removed and cleaned or replaced. Furthermore, because of the nature of the core brush, it serves to assist in cleaning the tubular member during the removal process.

With respect to the size of the tubular aperture 62, it can be appreciated that the diameter of the aperture can vary as a function of the maximum propellant gas pressure. However, when it is desirable to admit more propellant gas to the tubular member, several small apertures can be employed rather than a single larger aperture. While the flow of propellant gas through the aperture initially provides some assistance in the form of a suction effect in raising the liquid level in the tubulat member, the size of the aperture should not be so large as to unreasonably reduce the propellant gas pressure.

While the invention has been described with respect to preferred embodiments, it will be apparent to those skilled in the art that changes and modifications may be made without departing from the scope of the invention as defined by the claims. Accordingly, it is intended that all matter contained in the above description, or shown in the accompanying drawing, shall be interpreted as illustrative and not in a limiting sense.

## Claims

1. A static whipping device for intermixing of a whippable liquid and a propellant gas under pressure comprising:
a pressure container (10) having a top, a bottom (14) and an interior chamber (16);
means for introducing a propellant gas into the pressure container (10) and dispensing means (38) for passing a whipped product comprising a mixture of a whippable liquid and propellant gas from the container, each of said means being adjacent the top of said container (10);
a static means (54, 64, 66) disposed inside said container (10) for intermixing the whippable liquid and the propellant gas comprising:
an elongated tubular member (54) having one end (56) connected to said means (38) for dispensing a whipped product and' the other end extending to a point adjacent the bottom (14) of said container (10);
an elongated internal mixer means (64, 66) disposed within said tubular member (54) adjacent the top of said container;
said dispensing means (38) comprising a dispensing valve (74) for a whipped product disposed outside of said container (10) and in fluid flow communication with said static means (54, 64, 66);
an aperture (62) disposed in said tubular member (54) adjacent said internal mixer means (64, 66) for permitting a limited amount of propellant gas to enter said tubular member from said interior chamber (16), said aperture (62) being disposed in the upper portion of the elongated tubular member (54) and in communication with the charged propellant, whereby when said dispensing valve (74) is open, the pressurized whippable liquid is caused to flow through the tubular member (54) and the internal mixer means (64, 66) and past the aperture (62) where it is intermixed with a flow of said propellant gas through said aperture (62) to thereby agitate and intermix with said whippable liquid, said agitation and intermixing continuing through said tubular member (54) to produce an intimate mixture of gas and whippable liquid;
**characterized in that;**
(a) the elongated internal mixer means (64, 66) is an elongated core member (64) having a multiplicity of fiber elements (66) extending generally radially therefrom; and
(b) said elongated core member (64) with its fiber elements (66) is removable from the tubular member (54) via the bottom end of the tubular member.

2. The device according to Claim 1 wherein the means for introducing and the dispensing means (38) adjacent the top of said container is a single two-way valve (74).

3. The device according to Claim 1 wherein the tubular member (54) is formed of a plastic material and the perimeter of the aperture (62) is hardened, said hardening being accomplished by heating whereby the memory of the plastic is lost around the aperture (62) so that it will not close up.

4. A pressurized device for static whipping and dispensing of whippable products, suitable for food products, comprising:
a container body (10) having an interior chamber (16) adapted to confine propellant gas and a given amount of whippable liquid;
a cap element (24) secured to the container body (10) and closing said chamber (16), said cap element having a combined charging and dispensing passage therethrough;
a combined charging and dispensing valve (74) disposed outside of said cap (24) and connected to one end of said passage (34) and normally closing said passage (34);
an internal static means (54, 64, 66) for intimate mixing of said whippable liquid an the propellant gas, said internal static means (54, 64, 66) comprising:
an elongated tubular member (54) having one end (56) connected to the other end of the combined charging and dispensing passage (34) in said cap (24) and the other end extending to a point adjacent the bottom of said chamber (16), whereby when said chamber (16) contains a given amount of whippable liquid under propellant gas pressure the lower portion of said tubular member (54) is positioned in said whippable liquid and the upper portion is positioned in the propellant gas;
an aperture (62) being disposed in the upper portion of the elongated tubular member (54) and being in communication with said propellant gas, the size of said aperture (62) permitting a limited amount of propellant gas to enter said tubular member (54);
an elongated core member (64) disposed within said tubular member (54), whereby when said dispensing valve (74) is open, said pressurized liquid is caused to flow up said tubular member (54) past said aperture (62) where it is intermixed with a flow of propellant gas through said aperture (62) to thereby agitate and intermix with said whippable liquid, said agitation and intermixing continuing to produce a product for dispensing from said valve (74) and through a nozzle (80); characterized in that said elongated core member (b4) has a multiplicity of fiber elements (66) extending generally radially about said core member (64) and through which the pressurized liquid is caused to flow, said elongated core member (64) being removable from the tubular member (54) via the bottom end of said tubular member.

5. The device according to Claim 4 wherein the means adjacent the top of the said container is a single two-way valve.

6. The device according to Claim 4 wherein the tubular member (54) is formed of a plastic material and the perimerter of the aperture (62) is hardened, said hardening being accomplished by heating whereby the memory of the plastic is lost around the aperture so that it will not close up.

7. A method of using a device for producing whipped products, suitable for food products, comprising:
supplying a given quantity of whippable liquid to a pressure container, introducing a propellant gas into the pressure container to pressurize the whippable liquid and form a pressurizing head,
causing a portion of the whippable liquid to flow through an elongated zone of restricted area by the pressure of said propellant gas, said restricted area extending from an upper end in the pressure container to a point adjacent the bottom of the pressure container,
engaging said portion of whippable liquid with a static agitation means disposed in the elongated zone while introducing a limited volume of said propellant gas from the pressurizing head into said whippable liquid through an aperture entering into the restricted zone;
said static agitation means being an elongated core member, the static agitation occuring within said elongated zone;
contacting the propellant gas that flows through said aperture with the whippable liquid to agitate the liquid and cause an intimate intermixing of the liquid and gas;
expanding the mixture of propellant gas and liquid as it is passed through a dispensing nozzle to produce a whipped product; characterized in using said elongated core member having a multiplicity of fiber elements extending generally radially about said core member; and in said method comprising,
on dismantling the device to clean all the parts, pulling said core member out of said elongated zone via the end that in an assembled state of said parts is at said point adjacent the bottom of the pressure container thus causing said multiplicity of fiber elements to clean said elongated zone.

8. The method according to Claim 7 wherein the liquid level is below the aperture.

9. The method according to Claim 8 wherein the volume of gas entering the aperture is small relative to the volume of liquid entering into the elongated zone of restricted area.

## Patentansprüche

1. Statische Verschäumvorrichtung zum Durchmischen einer verschäumbaren Flüssigkeit und eines Treibgases unter Druck, die aufweist:
einen Druckbehälter (10), der ein Oberteil, einen Boden (14) und eine innere Kammer (16) hat;
eine Vorrichtung zum Einführen eines Treibgases in den Druckbehälter (10) und eine Abgabeeinrichtung (38) zum Durchgeben eines verschäumten Produktes, das eine Mischung einer verschäumbaren Flüssigkeit und eines Treibgases von dem Behälter aufweist, wobei jede der Einrichtungen zu dem oberen Ende des Behälters (10) benachbart ist;
eine statische Einrichtung (54, 64, 66), die innerhalb des Behälters (10) angeordnet ist zum Durchmischen der verschäumbaren Flüssigkeit und des Treibgases, die aufweist:
ein verlängertes röhrenförmiges Glied (54), das ein Ende (56) hat, das mit der Einrichtung (38) zum Abgeben eines verschäumten Produktes verbunden ist, und wobei das andere Ende sich zu einem Punkt erstreckt, der zu dem Boden (14) des Behälters (10) benachbart ist;
eine verlängerte interne Mischeinrichtung (64, 66), die in dem röhrenförmigen Glied (54) benachbart zu dem Oberteil des Behälters angeordnet ist;
wobei die Abgabeeinrichtung (38) ein Abgabeventil (74) für ein verschäumtes Produkt aufweist, das außerhalb des Behälters (10) angeordnet ist, und das in Fluidflußverbindung mit der statischen Einrichtung (54, 64, 66) ist;
eine Öffnung (62), die in dem röhrenförmigen Glied (54) benachbart zu der internen Mischeinrichtung (64, 66) angeordnet ist, um einer begrenzten Menge von Treibgas zu erlauben, in das röhrenförmige Glied einzutreten von der inneren Kammer (16), wobei die Öffnung (62) in dem oberen Abschnitt des verlängerten röhrenförmigen Gliedes (54) angeordnet ist und in Verbindung mit dem geladenen Treibmittel ist, wobei, wenn das Abgabeventil (74) offen ist, die unter Druck gesetzte verschäumbare Flüssigkeit veranlaßt wird durch das röhrenförmige Glied (54) und die interne Mischeinrichtung (64, 66) und hinter die Öffnung (62) zu fließen, wo es durchmischt wird mit einem Durchfluß von dem Treibgas durch die Öffnung (62), um dadurch die verschäumbare Flüssigkeit zu verrühren und zu durchmischen, wobei das Verrühren und Durchmischen sich durch das röhrenförmige Glied (54) fortsetzt, um eine innige Mischung von Gas und verschäumbarer Flüssigkeit zu produzieren;
**dadurch gekennzeichnet, daß**
(a) die verlängerte interne Mischeinrichtung (64, 66) ein verlängertes Kernglied (64) ist, das eine Vielzahl von Faserelementen (66) hat, die sich allgemein radial davon erstrecken; und
(b) das verlängerte Kernglied (64) mit seinen Faserelementen (66) entfernbar ist von dem röhrenförmigen Glied (54) über das untere Ende des röhrenförmigen Gliedes.

2. Vorrichtung gemäß Anspruch 1, worin die Einrichtung zum Einführen und die Abgabeeinrichtung (38), die an das Oberteil des Behälters anstößt, ein einzelnes Zwei-Wege-Ventil (74) ist.

3. Vorrichtung gemäß Anspruch 1, worin das röhrenförmige Glied (54) gebildet ist aus einem Kunststoffmaterial und der äußere Umfang der Öffnung (62) gehärtet ist, wobei das Härten durchgeführt wird durch Erhitzen, wobei das Gedächnis des Kunststoffes um die Öffnung (62) verloren wird, so daß sie nicht verschließen wird.

4. Druckvorrichtung zum statischen Verschäumen und Abgeben eines verschäumbaren Produktes, das geeignet für Lebensmittelprodukte ist, die aufweist:
einen Behälterkörper (10), der eine innere Kammer (16) hat, die angepaßt ist, Treibgas und eine gegebene Menge von verschäumbarer Flüssigkeit zu umschließen;
ein Abdeckelement (24), das an dem Behälterkörper (10) angebracht ist, und das die Kammer (16) verschließt, wobei das Abdeckelement einen kombinierten Lade- und Abgabedurchgang hierdurch hindurch hat;
ein kombiniertes Lade- und Abgabeventil (74), das an der Außenseite der Abdeckung (24) angebracht ist, und das verbunden ist mit einem Ende des Durchganges (34), und das normalerweise den Durchgang (34) abschließt;
eine interne statische Einrichtung (54, 64, 66) zum innigen Vermischen der verschäumbaren Flüssigkeit und dem Treibgas, wobei die innere statische Einrichtung (54, 64, 66) aufweist:
ein verlängertes röhrenförmiges Glied (54), das ein Ende (56) hat, das mit dem anderen Ende des kombinierten Lade- und Abgabedurchgangs (34) in der Abdeckung (24) verbunden ist, und wobei das andere Ende sich zu einem Punkt erstreckt, der zu dem Boden der Kammer (16) benachbart ist, wobei, wenn die Kammer (16) eine gegebene Menge von verschäumbarer Flüssigkeit unter Treibgasdruck enthält, der untere Abschnitt des röhrenförmigen Gliedes (54) in der verschäumbaren Flüssigkeit positioniert ist, und der obere Abschnitt in dem Treibgas positioniert ist;
eine Öffnung (62), die in dem oberen Abschnitt des verlängerten röhrenförmigen Gliedes (54) angeordnet ist, und die in Verbindung mit dem Treibgas ist, wobei die Größe der Öffnung (62) erlaubt, daß eine beschränkte Menge von Treibgas in das röhrenförmige Glied (54) eintritt;
ein verlängertes Kernglied (64), das in dem röhrenförmigen Glied (54) angeordnet ist, wobei, wenn das Abgabeventil (74) offen ist, die unter Druck gesetzte Flüssigkeit dazu veranlaßt wird, in dem röhrenförmigen Glied (54) hochzufließen hinter die Öffnung (62), wo es durchmischt wird mit einem Fluß von Treibgas durch die Öffnung (62), um sich dadurch zu verrühren und mit der verschäumbaren Flüssigkeit zu durchmischen, wobei das Verrühren und Durchmischen fortsetzt ein Produkt zu erzeugen zum Abgeben aus dem Ventil (74) und durch eine Düse (80);
**dadurch gekennzeichnet, daß**
das verlängerte Kernglied (64), eine Vielzahl von Faserelementen (66) hat, die sich allgemein radial um das Kernglied (64) erstrecken und durch das die unter Druck gesetzte Flüssigkeit veranlaßt wird zu fließen, wobei das verlängerte Kernglied (64) entfernbar von dem röhrenförmigen Glied (54) über das untere Ende des röhrenförmigen Gliedes ist.

5. Vorrichtung gemäß Anspruch 4, worin die Einrichtung, die zu dem Oberteil des Behälters benachbart ist, ein einzelnes Zwei-Wege-Ventil ist.

6. Vorrichtung gemäß Anspruch 4, worin das röhrenförmige Glied (54) aus einem Kunststoffmaterial gebildet ist, und worin der äußere Umfang der Öffnung (62) gehärtet ist, wobei das Härten durch Erhitzen durchgeführt wird, wodurch das Gedächnis des Kunststoffes um die Öffnung verloren ist, so daß sie nicht verschließen wird.

7. Verfahren zum Benutzen einer Vorrichtung zum Erzeugen verschäumter Produkte, geeignet für Lebensmittelprodukte, das aufweist:
Einspeisen einer gegebenen Menge von verschäumbarer Flüssigkeit zu einem Druckbehälter, Einführen eines Treibgases in den Druckbehälter zum unter Druck setzen der verschäumbaren Flüssigkeit und zum Formen eines unter Druck setzenden Kopfes,
Veranlassen eines Teiles der verschäumbaren Flüssigkeit durch eine verlängerte Zone einer beschränkten Fläche durch den Druck des Treibgases zu fließen, wobei die beschränkte Fläche sich von einem oberen Ende in dem Druckbehälter zu einem Punkt, der zu dem Boden des Druckbehälters benachbart ist, erstreckt,
in Eingriff bringen des Teiles der verschäumbaren Flüssigkeit mit einer statischen Einrichtung zum Verrühren, die in der verlängerten Zone angeordnet ist, während ein begrenztes Volumen des Treibgases von dem unter Druck setzenden Kopf in die verschäumbare Flüssigkeit durch eine Öffnung eingeführt wird, die in die beschränkte Zone eintritt;
wobei die statische Einrichtung zum Verrühren ein verlängertes Kernglied ist, bei dem das statischen Verrühren in der verlängerten Zone auftritt;
in Berührung bringen des Treibgases, das durch die Öffnung fließt, mit der verschäumbaren Flüssigkeit, um die Flüssigkeit zu verrühren und ein inniges Durchmischen der Flüssigkeit und des Gases zu veranlassen;
Ausdehnen der Mischung des Treibgases und der Flüssigkeit, wenn sie durch eine Abgabedüse gelaufen ist, um ein verschäumtes Produkt zu erzeugen;
**gekennzeichnet**,
durch Benutzung des verlängerten Kerngliedes, das eine Vielzahl von Faserelementen hat, die sich allgemein radial um das Kernglied erstrecken;
und indem das Verfahren aufweist:
beim Auseinanderbauen der Vorrichtung zum Reinigen aller Teile, Herausziehen des Kerngliedes aus der verlängerten Zone über das Ende, das in einem zusammengebauten Zustand der Teile an dem Punkt ist, der zu dem Boden des Druckbehälters benachbart ist, dadurch die Vielzahl von Faserelemente veranlassend die verlängerte Zone zu reinigen.

8. Verfahren gemäß Anspruch 7, worin der Flüssigkeitspegel unterhalb der Öffnung ist.

9. Verfahren gemäß Anspruch 8, worin das Volumen des Gases, das durch die Öffnung eintritt, klein ist, bezüglich dem Volumen der Flüssigkeit, die in die verlängerte Zone der beschränkten Fläche eintritt.

## Revendications

1. Un dispositif de fouettage statique pour le mélange entre eux d'un liquide à fouetter et d'un gaz propulseur sous pression, comprenant :
- un récipient sous pression (10) possédant un sommet, un fond (14) et une enceinte intérieure (16),
- des moyens pour introduire un gaz propulseur dans le récipient sous pression (10) et des moyens distributeurs (38) pour faire passer un produit fouetté comprenant un mélange d'un liquide à fouetter et d'un gaz propulseur en provenance du récipient, chacun de ces moyens étant adjacent au sommet dudit récipient (10),
- des moyens statiques (54, 64, 66), disposés à l'intérieur du récipient (10), pour mélanger entre eux le liquide à fouetter et le gaz propulseur, comprenant :
. un organe tubulaire allongé (54) ayant l'une de ses extrémités (56) reliée auxdits moyens pour distribuer un produit (38) et dont l'autre extrémité s'étend jusqu'à un point adjacent au fond (14) du récipient (10),
. des moyens mélangeurs internes allongés (64, 66) disposés dans l'organe tubulaire (54) et adjacents au sommet du récipient, les moyens distributeurs (38) comprenant une vanne distributrice (74) pour un produit fouetté, disposée à l'extérieur du récipient (10) et en communication d'écoulement de fluide avec les moyens statiques (54, 64, 66),
. une ouverture (62), disposée dans l'organe tubulaire (54), adjacente aux moyens mélangeurs internes (64, 66) pour permettre à une quantité limitée de gaz propulseur d'entrer dans l'organe tubulaire en provenance de l'enceinte intérieure (16), cette ouverture (62) étant disposée dans la partie supérieure de l'organe tubulaire allongé (54) et étant en communication avec le propulseur chargé, de sorte que, lorsque la vanne distributrice (74) est ouverte, le liquide à fouetter pressurisé soit amené à s'écouler au travers de l'organe tubulaire (54) et des moyens mélangeurs internes (64, 66) en passant devant l'ouverture (62), où il est mélangé avec le gaz propulseur qui s'écoule au travers de cette ouverture (62) de manière à ainsi agiter le liquide à fouetter et se mélanger avec lui, cette agitation et ce mélange se prolongeant dans l'organe tubulaire (54) de manière à produire un mélange intime de gaz et de liquide à fouetter,
dispositif caractérisé en ce que :
a) les moyens mélangeurs internes allongés (64, 66) sont constitués d'un organe central allongé (64) possédant une multiplicité d'éléments fibreux (66) s'étendant selon une direction générale radiale par rapport à celui-ci, et
b) cet organe central allongé (64) peut être retiré de l'organe tubulaire (54) avec ses éléments fibreux (66) via l'extrémité inférieure de l'organe tubulaire.

2. Le dispositif de la revendication 1, dans lequel les moyens pour introduire et les moyens distributeurs (38) adjacents au sommet du récipient sont une vanne unique à deux directions (74).

3. Le dispositif de la revendication 1, dans lequel l'organe tubulaire (54) est formé en un matériau plastique et le périmètre de l'ouverture (62) est durci, ce durcissement étant réalisé par chauffage de manière à faire perdre sa mémoire au plastique autour de l'ouverture (62) afin qu'elle ne puisse se refermer.

4. Un dispositif pressurisé pour le fouettage et la distribution statique de produits à fouetter, convenant à des produits alimentaires, comprenant :
- un corps de récipient (10), possédant une enceinte intérieure (16) conçue de manière à confiner un gaz propulseur et une quantité donnée de liquide à fouetter,
- un élément formant bouchon (24), monté sur le corps de récipient (10) et fermant ladite enceinte (16), cet élément formant bouchon possédant un passage traversant de charge et de distribution combinées,
- une vanne de charge et de distribution combinées (74), disposée à l'extérieur du bouchon (24) et reliée à l'une des extrémités dudit passage (34) et fermant normalement ce passage (34),
- des moyens statiques internes (54, 64, 66) pour un mélange intime du liquide à fouetter et du gaz propulseur, ces moyens statiques internes (54, 64, 66) comprenant :
. un organe tubulaire allongé (54) ayant l'une de ses extrémités (56) reliée à l'autre extrémité du passage de charge et de distribution combinées (34) du bouchon (24) et dont l'autre extrémité s'étend jusqu'à un point adjacent au fond de l'enceinte (16) de sorte que, lorsque cette enceinte (16) contient une quantité donnée de liquide à fouetter sous pression du gaz propulseur, la partie inférieure de cet organe tubulaire (54) se situe dans le liquide à fouetter et la partie supérieure se situe dans le gaz propulseur,
une ouverture (62) étant formée dans la partie supérieure de l'organe tubulaire allongé (54) et étant en communication avec le gaz propulseur, la dimension de cette ouverture (62) permettant à une quantité limitée de gaz propulseur d'entrer dans l'organe tubulaire (54),
. un organe central allongé (64), disposé dans l'organe tubulaire (54) de telle sorte que, lorsque la vanne de distribution (74) est ouverte, le liquide pressurisé soit sollicité de manière à s'écouler vers le haut dans l'organe tubulaire (54) en passant devant l'ouverture (62) où il est mélangé avec le gaz propulseur s'écoulant au travers de cette ouverture (62) de manière à agiter ainsi et mélanger entre eux gaz propulseur et liquide à fouetter, cette agitation et ce mélange se poursuivant de manière à produire un produit à distribuer par la vanne (74) et au travers d'une buse (80),
dispositif caractérisé en ce que l'organe central allongé (64) possède une multiplicité d'éléments fibreux (66) s'étendant selon une direction générale radiale autour de l'organe central (64) et au travers desquels on fait s'écouler le liquide pressurisé, l'organe central allongé (64) pouvant être retiré de l'organe tubulaire (54) via l'extrémité inférieure de cet organe tubulaire.

5. Le dispositif de la revendication 4, dans lequel les moyens adjacents au sommet du récipient sont constitués d'une unique vanne à deux directions.

6. Le dispositif de la revendication 4, dans lequel l'organe tubulaire (54) est constitué d'un matériau plastique et le périmètre de l'ouverture (62) est durci, ce durcissage étant réalisé par chauffage de manière à faire perdre au plastique sa mémoire autour de l'ouverture afin que celle-ci ne puisse se refermer.

7. Un procédé d'utilisation d'un dispositif pour produire des produits fouettés, convenant à des produits alimentaires, comprenant les étapes consistant à :
- remplir un récipient sous pression d'une quantité donnée de liquide à fouetter, introduire un gaz propulseur dans le récipient sous pression de manière à pressuriser le liquide à fouetter et former un volume de tête de pressurisation,
- faire s'écouler, par la pression du gaz propulseur, une partie du liquide à fouetter au travers d'une zone allongée de section réduite, cette section réduite s'étendant depuis une extrémité supérieure du récipient sous pression jusqu'à un point adjacent au fond du récipient sous pression,
- faire venir en contact cette partie du liquide à fouetter avec des moyens statiques d'agitation disposés dans la zone allongée, tout en introduisant un volume limité du gaz Propulseur en provenance du volume de tête de pressurisation dans le liquide à fouetter au travers d'une ouverture entrant dans la zone restreinte, les moyens d'agitation statique étant constitués d'un organe central allongé et l'agitation statique ayant lieu au sein de cette zone allongée,
- mettre en contact le gaz propulseur qui s'écoule au travers de l'ouverture avec le liquide à fouetter de manière à agiter le liquide et provoquer un mélange intime entre eux du liquide et du gaz,
- provoquer l'expansion du mélange de gaz propulseur et de liquide à leur passage au travers d'une buse distributrice afin de produire un produit fouetté,
procédé caractérisé en ce que l'on utilise un organe central allongé ayant une multiplicité d'éléments fibreux s'étendant selon une direction générale radiale autour de cet élément central, et en ce que le procédé comprend l'étape consistant, lors du démontage du dispositif afin d'en nettoyer toutes les pièces, à tirer l'organe central hors de la zone allongée via l'extrémité qui, à l'état assemblé desdites pièces, se trouve au point adjacent du fond du récipient sous pression, provoquant ainsi le nettoyage de la zone allongée par la multiplicité d'éléments fibreux.

8. Le procédé de la revendication 7, dans lequel le niveau du liquide se situe au-dessous de l'ouverture.

9. Le procédé de la revendication 8, dans lequel le volume de gaz entrant par l'ouverture est faible par rapport au volume de liquide entrant dans la zone allongée de section restreinte.
